(19) Europäisches Patentamt
European Patent Office
Office européen des brevets

(11) **EP 2 441 721 A1**

(12) **EUROPEAN PATENT APPLICATION**
published in accordance with Art. 153(4) EPC

(43) Date of publication:
**18.04.2012 Bulletin 2012/16**

(51) Int Cl.:
**B66B 1/28** (2006.01)    **B66B 1/30** (2006.01)
**H02P 29/00** (2006.01)

(21) Application number: **09845782.3**

(22) Date of filing: **08.06.2009**

(86) International application number:
**PCT/JP2009/060473**

(87) International publication number:
**WO 2010/143257 (16.12.2010 Gazette 2010/50)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(71) Applicant: **Mitsubishi Electric Corporation
Tokyo 100-8310 (JP)**

(72) Inventor: **KATO, Toshiaki
Tokyo 100-8310 (JP)**

(74) Representative: **HOFFMANN EITLE
Patent- und Rechtsanwälte
Arabellastraße 4
81925 München (DE)**

(54) **CONTROL DEVICE FOR ELEVATOR**

(57)    There is provided a control device for an elevator capable of quickly calculating an exact inertia according to an operation mode of elevator considering whether the operation mode of elevator is a power running operation or a generative running operation, and having good followability. In a control device for an elevator including a speed command inputting unit for sending a speed command to a power unit; a speed detector for detecting the actual speed of the power unit; and a torque controller for calculating a necessary torque based on the speed command and the actual speed, and sending a torque signal to drive the power unit, there are further included an initial parameter setting unit for setting the initial value of parameter of the torque controller in advance; an operation mode judging unit for judging whether the operation mode of power unit is a power running mode or a generative running mode; an inertia calculating unit for calculating the actual inertia value based on the speed command, the actual speed, and the torque signal, and the operation mode; and a parameter correcting unit for correcting the parameter of the torque controller by using the actual inertia value.

fig.1

**Description**

Technical Field

The present invention relates to a control device for an elevator.

Background Art

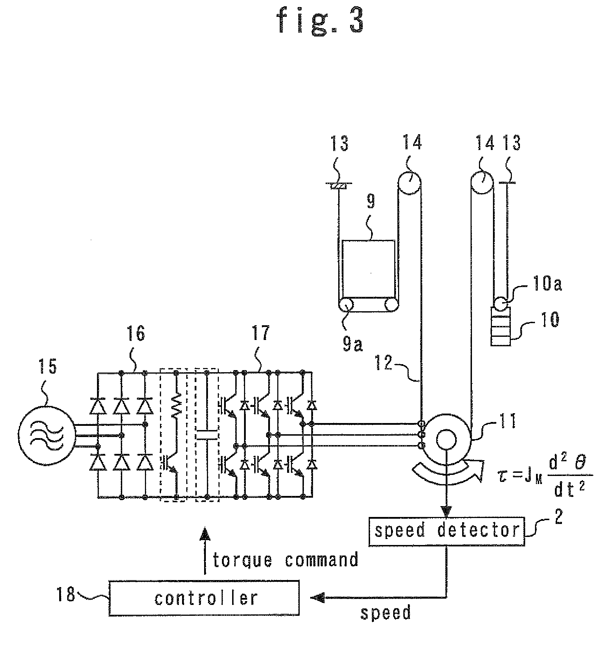

Figure 3 shows a general elevator control device in a conventional example.
In an elevator shaft, not shown, a car 9 for raising and lowering objects to be transported such as persons and luggage and a counterweight 10 having a weight that is in balance with the weights of the car 9 and the objects to be transported are elevatably provided.
Also, in the elevator shaft, a traction machine 11 for driving the rising and lowering action of the car 9 (and the counterweight 10) is provided, so that the rotational drive of this traction machine 11 is converted into the rising/lowering movement of the car 9 and the counterweight 10 via a main rope 12 for hangingly holding the car 9 and the counterweight 10.
By this main rope 12, the car 9 and the counterweight 10 are hangingly held elevatably as described below. One end of the main rope 12 is locked to a shaft top portion via a rope support 13 on the car 9 side, and the one end side of the main rope 12 is wound around a pair of car suspension sheaves 9a turnably provided under the car 9, whereby the car 9 is hangingly held.
The main rope 12 is wound around a sheave 14 on the car 9 side provided turnably in the shaft top portion to change the direction thereof, being wound around a driving sheave of the traction machine 11 to further change the direction thereof, and is wound around a sheave 14 on the counterweight 10 side provided turnably in the shaft top portion to change the direction thereof again, and thereafter is wound around the counterweight suspension sheave 10a turnably provided above the counterweight 10 on the other end side of the main rope 12, whereby the counterweight 10 is hangingly held.
Like the one end of the main rope 12, the other end of the main rope 12 is locked to the shaft top portion via a rope support 13 on the counterweight 10 side.
The traction machine 11 is rotationally driven by three-phase ac power supplied from a commercial power source 15.
The three-phase ac power supplied from the commercial power source 15 is first converted into a dc current by a converter 16. The dc power converted by the converter 16 is converted into three-phase ac power by an inverter 17 based on the command sent from a controller 18, and is supplied to the traction machine 11.
Also, the traction machine 11 is mounted with a speed detector 2 for detecting the actual rotational speed, that is, the actual speed of the traction machine 11, and the actual speed of the traction machine 11 detected by the speed detector 2 is sent to the controller 18. The controller 18 gives a torque command value to the inverter 17 according to the detection result of actual speed detected by the speed detector 2.
Thus, the traction machine 11 is rotationally driven by the three-phase ac power supplied from the commercial power source 15 under the control of the controller 18.
As the conventional elevator control device as described above, there has been known a control device for an elevator, in which the inertia of an object to be controlled is determined, and that result is reflected in a torque control part to improve the followability, including speed command inputting means for giving a speed command to a power unit provided on an elevator to be controlled; a model operation part for determining a model speed and a model torque assumed for the elevator to be controlled by arithmetic operation so that the model speed follows up the speed command; a speed detector for detecting the actual speed, which is the rotational speed of the power unit; a compensating operation part for computing an error compensation torque based on the difference between the model speed and the actual speed; a torque command computation part for computing a torque command from the model torque and the error compensation torque; a torque control part for driving the power unit by controlling it so that the produced torque of the power unit coincides with the torque command; and an inertia calculator for calculating the inertia of the object to be controlled based on the torque command (for example, refer to Patent Literature 1).
In the conventional elevator control device described in Patent Literature 1, the inertia calculator determines a torque Ta necessary for accelerating the elevator car from the torque command given to the object to be controlled during the elevator operations and calculates an inertia JM of the object to be controlled from Expression (1).
$$JM = T\alpha \times (1/\alpha) \times (D/2) \times (1/KL) \qquad \ldots (1)$$

(in which, JM = inertia of object to be controlled; T$\alpha$ = torque necessary to accelerate the elevator car; $\alpha$ = acceleration at that time; D = sheave coefficient; and KL = roping coefficient.)

Further, there have been known a control device for an elevator, which keeps a difference in inertia between an internal model and the whole of a control system at a low value even when the load in a car changes, and improves the followability of a speed control system, including weight detecting means for detecting the weight of the load in the car and being configured so as to judge whether or not the elevator is stopping; if the elevator is stopping, calculate the inertia of the whole of the elevator (control system) based on the weight of the load in the car obtained by the weight detecting means and set it as a model inertia; and calculate a model speed command value during elevator running by using that model inertia to control the speed of that elevator (for example, refer to Patent Literature 2) and a control device for an elevator, which can perform operation by the model operation part by using the calculated inertia even when the deviation of the inertia of control system from the initial set value is increased, including an inertia calculator for calculating the inertia of control system by adding the compensation inertia obtained based on the difference between the model speed and the actual speed of power unit to an inertia set value; and a set value changing part for changing the inertia set value based on the magnitude relationship between the speed command and the actual speed (for example, refer to Patent Literature 3).

Also, as a conventional elevator control device capable of reducing the error of calculated model inertia to improve the accuracy of follow-up to the speed command, there has been known a control device for an elevator, which can store a plurality of sample inertias, which are inertias of the whole of elevator measured at the car rising/lowering time so as to correspond to the weight value of load in the car, including an inertia calculation part for calculating the primary approximate expression of the model inertias, which are the estimated values of inertias of the whole of elevator, by the least-squares method based on the plurality of sample inertias stored beforehand and the weight value corresponding to each sample inertia, and calculating the model inertias at the car rising/lowering start time based on the calculated primary approximate expression and the weight value (for example, refer to Patent Literature 4).

Citation List

Patent Literature

Patent Literature 1: Japanese Patent No. 4230139
Patent Literature 2: Japanese Patent Laid-Open No. 2004-010224
Patent Literature 3: Japanese Patent Laid-Open No. 2006-199444
Patent Literature 4: Japanese Patent Laid-Open No. 2007-246262

Summary of Invention

Technical Problem

Unfortunately, in all of the conventional elevator control devices described in the above-listed patent literatures, a generative state, which is an operation mode peculiar to the elevator system, is not considered, and in the case where a power unit having a conversion efficiency different between the generative running operation time and the power running operation time is used, the calculation (identification) result of inertia of the control system (the whole of elevator) becomes different between the power running operation (the upward operation, for example, in the state in which a maximum allowable load is carried in the car) time and the generative running operation (the downward operation in the same state) time.

Therefore, in the case where it is desired to obtain a highly accurate inertia identification value, it is necessary, for example, to identify the inertias at the power running operation time and at the generative running operation time and to perform linear interpolation of the results, so that the identification operation for performing identification must be performed a plurality of times, which poses a problem that much time is required to perform inertia identification. Also, it is necessary to hold the inertia identification values at both of the power running operation time and the generative running operation time, which poses a problem that a storage area for holding these identification value data is needed in excess.

Also, when it is judged whether the operation mode is a power running operation or a generative running operation, the judgment is made based on the actual current value and voltage value in the power unit, so that an ammeter and a voltmeter (or a power meter etc.) must be provided separately, which poses a problem of increased cost.

The present invention has been made to solve the above problems, and accordingly a first object thereof is to provide a control device for an elevator capable of quickly calculating an exact inertia according to an operation mode of elevator considering whether the operation mode of elevator is a power running operation or a generative running operation, and having good followability.

A second object thereof is to provide a control device for an elevator capable of making, at a low cost, judgment as to whether the operation mode of elevator is a power running operation or a generative running operation without adding instruments such as an ammeter and a voltmeter separately.

Means for Solving the Problems

A control device for an elevator according to the present invention comprises a speed command inputting unit for sending a speed command to a power unit provided in an elevator to be controlled; a speed detector for detecting the actual speed of an elevator car or the power unit; and a torque controller for calculating a necessary torque so that the elevator is operated at the speed command based on the speed command and the actual speed, and sending a torque signal to the power unit to drive the power unit. The control device further comprises an initial parameter setting unit for setting the initial value of parameter used for calculation by the torque controller based on the pre-assumed inertia value of the elevator; an operation mode judging unit for judging whether the operation mode of power unit is a power running mode or a generative running mode; an inertia calculating unit for calculating the actual inertia value of the elevator based on the speed command, the actual speed, the torque signal, and the result of judgment as to whether the operation mode is the power running mode or the generative running mode made by the operation mode judging unit when the power unit is operated according to the speed command; and a parameter correcting unit for correcting the parameter used for calculation by the torque controller by using the actual inertia value calculated by the inertia calculating unit.

Advantageous Effects of Invention

The present invention provides a control device for an elevator including a speed command inputting unit for sending a speed command to a power unit provided in an elevator to be controlled; a speed detector for detecting the actual speed of an elevator car or the power unit; and a torque controller for calculating a necessary torque so that the elevator is operated at the speed command based on the speed command and the actual speed, and sending a torque signal to the power unit to drive the power unit, configured so as to further include an initial parameter setting unit for setting the initial value of parameter used for calculation by the torque controller based on the pre-assumed inertia value of the elevator; an operation mode judging unit for judging whether the operation mode of power unit is a power running mode or a generative running mode; an inertia calculating unit for calculating the actual inertia value of the elevator based on the speed command, the actual speed, the torque signal, and the result of judgment as to whether the operation mode is the power running mode or the generative running mode made by the operation mode judging unit when the power unit is operated according to the speed command; and a parameter correcting unit for correcting the parameter used for calculation by the torque controller by using the actual inertia value calculated by the inertia calculating unit. Therefore, this elevator control device achieves effects of being capable of quickly calculating an exact inertia according to the operation mode of elevator considering whether the operation mode of elevator is a power running operation or a generative running operation and having good followability.

Brief Description of the Drawings

Figure 1 is an explanatory block diagram showing the entire configuration of a control device for an elevator and the flow of signals related to a first embodiment of the present invention.
Figure 2 is an explanatory block diagram showing the entire configuration of a control device for an elevator and the flow of signals related to a second embodiment of the present invention.
Figure 3 is an explanatory block diagram showing the entire configuration of a conventional elevator and its control device.

Description of Embodiments

The present invention will now be described with reference to the accompanying drawings. In all the drawings, the same reference signs are applied to the same or equivalent parts, and the duplicated explanation thereof is simplified or omitted as appropriate.

First embodiment

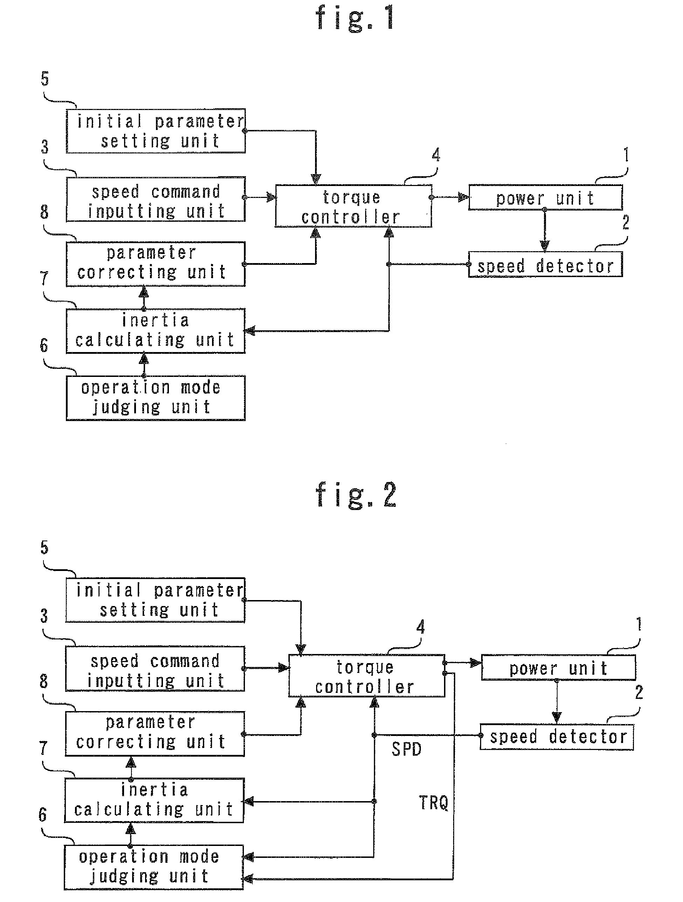

Figure 1 is an explanatory block diagram relating to a first embodiment of the present invention and showing the entire configuration of a control device for an elevator and the flow of signals.

In Figure 1, reference sign 1 denotes a power unit for driving the rising and lowering action of an elevator to be controlled. This power unit 1 is mounted with a speed detector 2 for detecting the actual rotational speed, that is, the actual speed of the power unit 1.

Reference sign 3 denotes a speed command inputting unit for giving a speed command to the power unit 1. The actual speed of the power unit 1 detected by the speed detector 2 and the speed command sent from the speed command inputting unit 3 are given to a torque controller 4. This torque controller 4 receives the actual speed and the speed command, calculates a necessary torque so that the elevator is operated at the speed command, and sends a torque signal to the power unit 1 to drive the power unit 1.

The initial value of control parameter used for calculation by the torque controller 4 is set based on a pre-assumed inertia value by an initial parameter setting unit 5.

An operation mode judging unit 6 judges whether an operation mode representing the operation state of the power unit 1 is a power running mode or a generative running mode. Herein, the power running mode represents an operation state in which an energy input from the outside of the power unit 1 to the inside of the power unit 1 is necessary at the upward operation time, for example, in the state in which a maximum allowable load is carried in a car 9, and the generative running mode represents an operation state in which energy is outputted from the inside of the power unit 1 to the outside of the power unit 1 at the downward operation time, for example, in the state in which a maximum allowable load is carried in a car 9.

Also, the actual inertia value of the elevator is calculated by an inertia calculating unit 7 based on the speed command, the actual speed, and the information sent from the torque controller 4 when the power unit 1 is operated according to the speed command with the parameter set by the initial parameter setting unit 5.

As in the conventional elevator control device described in Patent Literature 1, described before, the inertia calculating unit 7 determines a torque Ta necessary for accelerating the elevator car 9 by using a torque signal sent from the torque controller 4 to the power unit 1 during the elevator operation, and calculates an inertia JM of an object to be controlled. At this time, the inertia JM is calculated from Expression (2).

$$JM = T\alpha \times E \times (1/\alpha) \times (D/2) \times (1/KL) \quad \dots (2)$$

In which, JM = inertia of object to be controlled; $T\alpha$ = torque necessary to accelerate the elevator car; $\alpha$ = acceleration at that time; D = sheave coefficient; KL = roping coefficient; and E = conversion efficiency for each operation mode judged by the operation mode judging unit 6.

For this conversion efficiency E, E is equal to EP at the power running mode time, and E is equal to ER at the generative running mode time. These values of EP and ER are set in advance, and when the inertia. JM is calculated, the inertia calculating unit 7 acquires the present operation mode from the operation mode judging unit 6, and calculates the inertia JM from Expression (2) so that the inertia JM is in proportion to the conversion efficiency E by setting E equal to EP if the present operation mode is the power running mode and by setting E equal to ER if the present operation mode is the generative running mode.

The parameter used for calculation by the torque controller 4 is corrected by a parameter correcting unit 8 by using the actual inertia value calculated by the inertia calculating unit 7,

In this embodiment, the control device for an elevator is operated as described below.

First, to move the elevator, a speed command is sent out or the speed command inputting unit 3. Next, the torque controller 4 calculates a torque for controlling the rotational drive of the power unit 1 according to the speed command, and drives the power unit 1 based on this calculated torque.

Successively, during the operation of the power unit 1, the operation mode judging unit 6 judges whether the present operation mode of the power unit 1 is the power running mode or the generative running mode.

Thereafter, based on the judgment result of the operation mode judging unit 6, the inertia calculating unit 7 calculates an inertia by using Expression (2) by setting E equal to EP if the present operation mode is the power running mode and by setting E equal to ER if the present operation mode is the generative running mode.

Based on the inertia value calculated by the inertia calculating unit 7, the parameter correcting unit 8 updates the parameter used for calculation by the torque controller 4, and after this, the torque controller 4 calculates the torque by using the updated parameter.

Instead of detecting the rotational speed of the power unit, the speed detector may detect the actual speed of the car and may make it the actual speed.

The control device for an elevator configured as described above is a control device for an elevator including a speed command inputting unit for sending a speed command to a power unit provided in an elevator to be controlled; a speed detector for detecting the actual speed of an elevator car or the power unit; and a torque controller for calculating a necessary torque so that the elevator is operated at the speed command based on the speed command and the actual speed, and sending a torque signal to the power unit to drive the power unit, in which an initial parameter setting unit sets the initial value of parameter used for calculation by the torque controller based on the pre-assumed inertia value of the elevator; an operation mode judging unit judges whether the operation mode of power unit is a power running mode or a generative running mode; an inertia calculating unit calculates the actual inertia value of the elevator based on the speed command, the actual speed, the torque signal, and the result of judgment as to whether the operation mode is the power running mode or the generative running mode made by the operation mode judging unit when the power unit is operated according to the speed command; and a parameter correcting unit corrects the parameter used for calculation by the torque controller by using the actual inertia value calculated by the inertia calculating unit.

Therefore, this elevator control device can quickly calculate an exact inertia according to an operation mode of elevator even if the operation mode is only one of a power running operation and a generative running operation considering whether the operation mode of elevator is the power running operation or the generative running operation, and can reflect the exact inertia in the control of elevator, therefore having good followability.

Also, since the followability is good, the consumption of wasteful energy is restrained, and the service life of elevator equipment can be prolonged.

The inertia calculating unit calculates the actual inertia value of elevator so that the actual inertia value is in proportion to the conversion efficiency predefined for each of the power running mode and the generative running mode of operation mode.

Second embodiment

Figure 2 is an explanatory block diagram relating to a second embodiment of the present invention and showing the entire configuration of a control device for an elevator and the flow of signals.

The second embodiment explained herein is configured so that, in the configuration of the above-described first embodiment, the operation mode judging unit makes judgment of the present operation mode of an elevator to be controlled based on the actual speed of the speed detector and the torque signal sent from the torque controller.

That is to say, when judging the operation mode representing the operation state of the power unit 1, the operation mode judging unit 6 acquires an actual speed SPD of the power unit 1 from the speed detector 2, and acquires a torque signal TRQ sent from the torque controller 4 to the power unit 1.

Based on the actual speed SPD and the torque signal TRQ, if positive/negative signs thereof are the same (including the case where one is zero), it is judged that the operation mode is the power running mode, and if the positive/negative signs thereof are different, it is judged that the operation mode is the generative running mode.

In other words, the judgment of operation mode by using the operation mode judging unit 6 is made based on the value of product of the actual speed SPD and the torque signal TRQ. If $SPD \times TRQ \geq 0$, it is judged that the operation mode is the power running mode, and if $SPD \times TRQ < 0$, it is judged that the operation mode is the generative running mode.

Herein, for positive/negative signs of the actual speed SPD and the torque signal TRQ, for example, it can be thought that the rising direction of the car 9 is made positive, and the lowering direction thereof is made negative.

In the control device for an elevator of the second embodiment, other configurations are the same as those of the first embodiment, and the detailed explanation thereof is omitted. The control device for an elevator of the second embodiment includes the power unit 1 for driving the elevator; the speed detector 2 for detecting the actual speed of the power unit 1; the speed command inputting unit 3 for giving a speed command to the power unit 1; the torque controller 4 that receives the actual speed and the speed command, calculates a necessary torque so that the elevator is operated at the speed command, and drives the power unit 1; the initial parameter setting unit 5 for setting the initial value of control parameter used for calculation by the torque controller 4 based on a pre-assumed inertia value; the inertia calculating unit 7 for calculating the actual inertia value of the elevator from Expression (2) based on the speed command, the actual speed, and the information sent from the torque controller 4 and the operation mode judging unit 6; and the parameter correcting unit 8 for correcting the parameter used for calculation by the torque controller 4 by using the actual inertia value calculated by the inertia calculating unit 7.

In this embodiment, the control device for an elevator is operated as described below.

First, to move the elevator, a speed command is sent out of the speed command inputting unit 3. Next, the torque controller 4 calculates a torque for controlling the rotational drive of the power unit 1 according to the speed command, and delivers this calculated torque signal TRQ to drive the power unit 1.

Successively, during the operation of the power unit 1, based on the actual speed SPD sent from the speed detector 2 and the torque signal TRQ sent from the torque controller 4, the operation mode judging unit 6 judges whether the present operation mode of the power unit 1 is the power running mode or the generative running mode by checking positive/negative signs thereof.

Thereafter, based on the judgment result of the operation mode judging unit 6, the inertia calculating unit 7 calculates an inertia by using Expression (2) by setting E equal to EP if the present operation mode is the power running mode and by setting E equal to ER if the present operation mode is the generative running mode.

Based on the inertia value calculated by the inertia calculating unit 7, the parameter correcting unit 8 updates the parameter used for calculation by the torque controller 4, and after this, the torque controller 4 calculates the torque by using the updated parameter.

In this embodiment, as the SPD used for judgment of operation mode by the operation mode judging unit 6, the actual speed detected by the speed detector is used. However, as the SPD, the speed command sent from the speed command inputting unit can also be used.

Also, as in the first embodiment, instead of detecting the rotational speed of the power unit, the speed detector may detect the actual speed of the car and may make it the actual speed.

The control device for an elevator configured as described above can achieve the same effects as those of the first embodiment, and additionally, can make, at a low cost, judgment as to whether the operation mode of elevator is the power running operation or the generative running operation without adding instruments such as an ammeter, a voltmeter (power meter), and the like separately because the operation mode judging unit judges whether the operation mode is the power running mode or the generative running mode based on the speed command or the actual speed and the torque signal.

Also, since the addition of the ammeter, the voltmeter, and the like is unnecessary, a control device main body and a package thereof, for example, at the transportation time can be made small in size and light in weight, and also the efficiency in the production process of control device can be enhanced.

The operation mode judging unit judges that the operation mode is the power running mode if positive/negative signs of the speed command or the actual speed and the torque signal are the same, and judges that the operation mode is the generative running mode if the positive/negative signs thereof are different.

Industrial Applicability

The present invention can be applied to a control device for an elevator in which the inertia of an object to be controlled is determined, and that result is reflected in torque control of a power unit.

Description of Symbols

| 1   | power unit                      |
|-----|---------------------------------|
| 2   | speed detector                  |
| 3   | speed command inputting unit    |
| 4   | torque controller               |
| 5   | initial parameter setting unit  |
| 6   | operation mode judging unit     |
| 7   | inertia calculating unit        |
| 8   | parameter correcting unit       |
| 9   | car                             |
| 9a  | car suspension sheaves          |
| 10  | counterweight                   |
| 10a | counterweight suspension sheave |
| 11  | traction machine                |
| 12  | main rope                       |
| 13  | rope support                    |
| 14  | sheave                          |
| 15  | speed detector                  |
| 16  | converter                       |
| 17  | inverter                        |
| 18  | controller                      |

**Claims**

1. A control device for an elevator comprising:

   a speed command inputting unit for sending a speed command to a power unit provided in an elevator to be controlled;
   a speed detector for detecting the actual speed of an elevator car or the power unit; and
   a torque controller for calculating a necessary torque so that the elevator is operated at the speed command based on the speed command and the actual speed, and sending a torque signal to the power unit to drive the power unit, **characterized in that**
   the control device further comprises:
   an initial parameter setting unit for setting the initial value of parameter used for calculation by the torque controller based on the pre-assumed inertia value of the elevator;
   an operation mode judging unit for judging whether the operation mode of power unit is a power running mode or a generative running mode;
   an inertia calculating unit for calculating the actual inertia value of the elevator based on the speed command, the actual speed, the torque signal, and the result of judgment as to whether the operation mode is the power running mode or the generative running mode made by the operation mode judging unit when the power unit is operated according to the speed command; and
   a parameter correcting unit for correcting the parameter used for calculation by the torque controller by using the actual inertia value calculated by the inertia calculating unit.

2. The control device for an elevator according to claim 1, **characterized in that** the inertia calculating unit calculates the actual inertia value of the elevator so that the actual inertia value is in proportion to conversion efficiency predefined for each of the power running mode and the generative running mode of operation mode.

3. The control device for an elevator according to claim 1 or 2, **characterized in that** the operation mode judging unit judges whether the operation mode is the power running mode or the generative running mode based on the speed command or the actual speed and the torque signal.

4. The control device for an elevator according to claim 3, **characterized in that** operation mode judging unit judges that the operation mode is the power running mode if positive/negative signs of the speed command or the actual speed and the torque signal are the same, and judges that the operation mode is the generative running mode if the positive/negative signs thereof are different.

# fig.1

# fig.2

# fig. 3

$$\tau = J_M \frac{d^2\theta}{dt^2}$$

speed detector — 2

↑ torque command

18 — controller ← speed

## INTERNATIONAL SEARCH REPORT

| International application No. |
|---|
| PCT/JP2009/060473 |

A. CLASSIFICATION OF SUBJECT MATTER
*B66B1/28*(2006.01)i, *B66B1/30*(2006.01)i, *H02P29/00*(2006.01)i

According to International Patent Classification (IPC) or to both national classification and IPC

B. FIELDS SEARCHED

Minimum documentation searched (classification system followed by classification symbols)
B66B1/28, B66B1/30, H02P29/00

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 4230139 B2 (Mitsubishi Electric Corp.), 25 February 2009 (25.02.2009), entire text; all drawings (Family: none) | 1-4 |
| A | JP 2004-10224 A (Mitsubishi Electric Corp.), 15 January 2004 (15.01.2004), entire text; all drawings (Family: none) | 1-4 |
| A | JP 2006-199444 A (Mitsubishi Electric Corp.), 03 August 2006 (03.08.2006), entire text; all drawings (Family: none) | 1-4 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 January, 2010 (12.01.10) | 19 January, 2010 (19.01.10) |

| Name and mailing address of the ISA/ Japanese Patent Office | Authorized officer |
|---|---|
| Facsimile No. | Telephone No. |

Form PCT/ISA/210 (second sheet) (April 2007)

# EP 2 441 721 A1

**INTERNATIONAL SEARCH REPORT**

International application No.

PCT/JP2009/060473

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-246262 A (Mitsubishi Electric Corp.), 27 September 2007 (27.09.2007), entire text; all drawings (Family: none) | 1-4 |
| A | JP 6-321440 A (Mitsubishi Electric Corp.), 22 November 1994 (22.11.1994), entire text; all drawings & KR 10-1997-0006584 B & CN 1098069 A | 1-4 |
| A | JP 2007-252142 A (Yaskawa Electric Corp.), 27 September 2007 (27.09.2007), entire text; all drawings (Family: none) | 1-4 |

Form PCT/ISA/210 (continuation of second sheet) (April 2007)

12

**REFERENCES CITED IN THE DESCRIPTION**

**Patent documents cited in the description**

- JP 4230139 B
- JP 2004010224 A
- JP 2006199444 A
- JP 2007246262 A